(19) Europäisches Patentamt
European Patent Office
Office européen des brevets

(11) Publication number: **0 115 709**
**B1**

(12) # EUROPEAN PATENT SPECIFICATION

(45) Date of publication of patent specification: **01.03.89**

(51) Int. Cl.$^4$: **C 08 F 220/30**

(21) Application number: **83308044.3**

(22) Date of filing: **30.12.83**

(54) **Readily curable composition.**

(30) Priority: **11.01.83 JP 1773/83**

(43) Date of publication of application:
**15.08.84 Bulletin 84/33**

(45) Publication of the grant of the patent:
**01.03.89 Bulletin 89/09**

(84) Designated Contracting States:
**CH DE FR GB LI**

(56) References cited:
**US-A-3 457 212**
**US-A-4 067 853**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Nakabayashi, Nobuo**
**6-20, Koganehara 5-chome**
**Matsudo-shi Chiba-ken (JP)**
Inventor: **Miyamoto, Ryoichi**
**14-10, Shimorenjaku 6-chome**
**Mitaka-shi Tokyo (JP)**

(74) Representative: **Geering, Keith Edwin et al**
**REDDIE & GROSE 16 Theobalds Road**
**London WC1X 8PL (GB)**

**EP 0 115 709 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a readily curable composition containing a bis(methacryloxypolyethoxy) benzene.

Compositions containing, for example, diacrylate or dimethacrylate of ethylene glycol or polyethylene glycol have been heretofore known as acrylic compositions capable of being rapidly cured at an ambient temperature. Of these compositions, dimethacrylate of polyethylene glycol exhibits the best cold curing properties. However, the use of dimethacrylate of polyethylene glycol as adhesives or for making molded articles involves problems in that the water absorption properties of the cured products are undesirably high so that their water resistance is poor. Whilst it is known that cured dimethacrylate of bisphenol A, (2,2-bis(4-methacryloxypolyethoxyphenyl) propane, exhibits good water resistance, the cold curing properties of the starting material are not good. US Patent No. 4067853 discloses such bisphenol-A derivative (and US Patent No. 3457212 discloses aromatic dicarboxylic acid derivatives) but neither teach the dihydric phenol derivatives for readily curable compositions in accordance with the present invention.

Other objects and advantages of the present invention will be apparent from the following description.

In accordance with the present invention, there is provided a readily curable composition comprising:

(a) from 5 to 95% by weight of a bis(methacryloxypolyethoxy)benzene having the general formula (I):

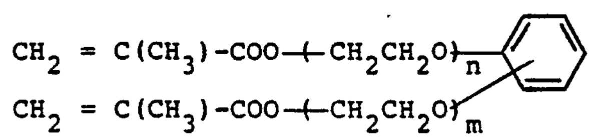

(I)

wherein n and m are the same or different numbers of 1 or more provided that n + m is 2 to 4;

(b) a vinyl compound different from component (a); and

(c) a curing catalyst.

Examples of the bis(methacryloxypolyethoxy) benzenes are 1,2- and 1,3-bis(methacryloxpolyethoxy) benzenes, including 1,2- and 1,3-bis(methacryloxyethoxy) benzenes. These compounds can be used alone or in any mixture thereof.

The bis(methacryloxypolyethoxy) benzenes having the general formula (I) can be prepared by the esterification of dihydroxyalkoxybenzenes with methacrylic acid. The dihydroxyalkoxybenzenes can be prepared by the addition reaction of an epoxide to dihydric phenols such as catechol, resorcinol, and hydroquinone. The values of n and m in the above-mentioned general formula (I) can be controlled by varying the addition mole number of the epoxide. When the sum of n and m in the general formula (I) is more than 4, the water absorption properties of the cured products are poor. Contrary to this, when the sum of n and m is less than 2, the desired cold curing properties cannot be obtained and the resultant cured products become brittle and do not have the desired properties due to small compression strength.

Component (a) — bis(methacryloxypolyethoxy) benzene of formula (I) — constitutes 5% to 95% by weight, preferably 10% to 80% by weight, and more preferably 10% to 70% by weight, of the present composition. When the content of the bis(methacryloxypolyethoxy) benzene is less than 5% by weight, the cold curing properties of the resultant composition may be insufficient. Contrary to this, when the content of the bis(methacryloxypolyethoxy) benzene is more than 95% by weight, the resultant composition may be solidified (i.e., not in the form of a liquid or paste), whereby processability or workability become difficult.

The vinyl compounds used as the component (b) in the present invention are those which can be cure-reacted with the above-mentioned bis(methacryloxypolyethoxy) benzene. Typical examples of such vinyl compounds are acrylic compounds such as methyl acrylate, methyl methacrylate, ethyl methacrylate, butyl methacrylate, ethylene glycol dimethacrylate, diethylene glycol dimethacrylate, triethylene glycol dimethacrylate 2,2-bis(p-2'-hydroxy-3'-methacryloxypropoxyphenyl) propane, 2,2-bis(4-methacryloxyethoxyphenyl) propane, 2,2-bis(4-methacryloxypolyethoxyphenyl) propane, and 2,2-bis(4-methacryloxyphenyl) propane. Other examples of the vinyl compounds are vinyl acetate, styrene, and divinylbenzene.

The vinyl compounds are usually incorporated into the present composition in an amount of 60% by weight or less, preferably 50% by weight or less, and more desirably 40% by weight, based on the total amount of the composition. The above-mentioned vinyl compounds can be used alone or in any mixture thereof.

The curing catalysts usable as the component (c) in the present invention include, for example, free radical generators and photosensitizers. Examples of the free radical generators are peroxides such as tri-n-butylborane oxide, cobalt naphthate-methyl ethyl ketone peroxide, benzoyl peroxide, t-butyl perbenzoate, dilauroyl peroxide, t-butyl perpivalate, bis(2,4-dichlorobenzoyl) peroxide, and dicumyl peroxide. Examples of the photosensitizers are benzoin methyl ether, benzoin ethyl ether, benzoin isopropyl ether, camphorquinone, diacetyl, 2,3-pentane dione, and benzyl. The peroxide catalysts are desirably used together with curing accelerators.

The above-mentioned curing catalyst are usually included in the present composition in an amount of 0.1% to 5% by weight, preferably 0.2% to 3% by weight, based on the total amount of the curable composition.

The present curable composition may contain one or more of filler, tackifier, curing accelerator, and other conventional ingredients. Examples of the fillers are kaolin, talc, clay, calcium carbonate, silica, alumina, calcium phosphate, glass powder, and polymethylmethacrylate powder. Examples of the tackifiers are wax and ethylene-vinyl acetate copolymer. Examples of the curing accelerators are anilines such as N,N-dimethyl aniline and N,N-diethanol-p-toluidine, and phosphorus compounds such as triphenyl phosphine and triethyl phosphine.

The present curable composition can be prepared without using a solvent, by first mixing the above-mentioned bis(methacryloxypolyethoxy) benzene with the vinyl compound to form a uniform solution, followed by the addition of the curing catalyst and any optional component such as the filler. Thus, the present curing composition can be obtained in the form of a paste. However, the preparation of the present curable composition is not limited to this method. For instance, the present curable composition can also be prepared by simultaneously mixing the bis(methacryloxypolyethoxy) benzene, vinyl compound, curing catalyst, and any optional component together to obtain the desired composition in the form of a paste.

The present composition thus obtained can be cured by allowing it to stand at ordinary temperature or by means of visible light irradiation. The present composition is cured in the absence of oxygen at ordinary temperature when allowed to stand for 1 to 2 weeks, although the curing velocity depends upon the amount of curing catalyst contained in the composition. Preferably, a first mixture (A) containing peroxide catalyst, curing accelerator, and optionally filler, and a second mixture (B) containing the bis(methacryloxy-polyethoxy) benzene, vinyl compound, curing catalyst, and optionally curing accelerator are separately prepared, and are mixed together just prior to use. When photo curing, the present curable composition is photo-irradiated by, for example, a high pressure, medium pressure, or low pressure mercury lamp, or a halogen lamp.

The present curable composition has good cold curing properties. The curing velocity thereof is high and the cured product derived therefrom has low water absorbance, and good hardness, and compression and bending strength. Thus, the present curable composition is especially suitable for use in the dental composition coating composition, and plastic molding fields. In particular, the present curable composition can be used as a dental composite resin, a dental resin cement, or a dental adhesive.

## Examples

The present invention will now be illustrated by, but is by no means limited to, the following Examples. In the Examples, the water absorption and the Brinell hardness of the cured products were evaluated by water absorption and Brinell hardness test methods according to JIS—T—6508, and the compression strength of the cured products was evaluated by a general test method for thermosetting plastics according to JIS—K—6911.

### Example 1

A 1 g amount of 1,3-bismethacryloxyethoxy benzene and 1 g of triethylene glycol dimethacrylate were mixed together, and 10 mg of camphorquinone was dissolved in the resultant solution. Then, 0.2 g of finely divided silica Aerosil® R972 (manufactured by Nippon Aerosil Co., Ltd.) was added to the solution to form a paste.

A fluorocarbon resin plate (Teflon® manufactured by Mitsui Fluorochemical Co., Ltd.) having a thickness of 3 mm and having a circular hole of 3 mm diameter therein was prepared. This fluorocarbon resin plate was superposed on another fluorocarbon resin plate having no circular hole and the above-prepared paste was filled into the circular hole. The upper surface of the fluorocarbon resin plate was covered with cellophane and the paste was irradiated with visible light having a wavelength of 350 to 700 nm by using a visible light irradiator (Translux manufactured by Kulzer Co., Ltd.), to determine the curing time.

The cured test piece was taken from the circular hole after curing and the water absorption thereof was measured. The results are shown in Table 1.

### Comparative Example 1

Example 1 was repeated, except that 2 g of triethylene glycol dimethacrylate was used in lieu of 1 g of 1,3-bismethacryloxyethoxy benzene and 1 g of triethylene glycol dimethacrylate.

The results are shown in Table 1.

### Comparative Example 2

Example 1 was repeated, except that 0.6 g of 2,2-bis(p-2′-hydroxy-3′-methacryloxypropoxyphenyl) propane and 1.4 g of triethylene glycol dimethacrylate were used in lieu of 1 g of 1,3-bismethacryloxyethoxy benzene and 1 g of triethylene glycol dimethacrylate.

The results are shown in Table 1.

TABLE 1

| No. | Content of BMEB* (wt.%) | Curing time (sec) | Water absorption (mg/cm$^2$ |
|---|---|---|---|
| Example 1 | 45 | 9 | 1.8 |
| Comparative Example 1 | 0 | 10 | 3.4 |
| Comparative Example 2 | 0 | 20 | 2.4 |

*1,3-bismethacryloxyethoxy benzene

Example 2

A 1.4 g amount of 1,3-bismethacryloxyethoxy benzene, 0.6 g triethylene glycol dimethacrylate, 0.01 g of benzoyl peroxide, and 0.5 g of finely divided silica (Aerosil® R972 manufactured by Nippon Aerosil Co., Ltd.) were mixed with a spatula. Then, the resultant paste was rapidly mixed with 0.015 g of N,N-diethanol-p-toluidine.

The paste thus obtained was filled into the circular hole of a fluorocarbon resin plate as used in Example 1. After being allowed to stand for one night, the test piece was taken from the hole. The Brinell hardness and the water absorption were determined.

The results are shown in Table 2.

Comparative Example 3

Example 2 was repeated, except that 2 g of triethylene glycol dimethacrylate was used in lieu of 1.4 g of 1,3-bismethacryloxyethoxy benzene and 0.6 g of triethylene glycol dimethacrylate.

The results are shown in Table 2.

TABLE 2

| No. | Content of BMEB (wt%) | Water absorption (mg/cm$^2$) | Brinell hardness |
|---|---|---|---|
| Example 2 | 56 | 1.4 | 21 |
| Comparative Example 3 | 0 | 2.4 | 1.9 |

Example 3

A 2.7 g amount of 1,3-bismethacryloxyethoxy benzene, 2.7 g of triethylene glycol, 7.0 g of silane treated ultra-finely divided anhydrous silica having primary particles with an average diameter of 40 mμ, 0.16 g of benzoyl peroxide, and 0.05 g of p-tolyl diethanolamine were rapidly mixed with a spatula on a glass plate. Thus, a pasty mixture was obtained.

The pasty mixture was filled into a circular hole, having a diameter of 4 mm, provided in a fluorocarbon resin plate having a thickness of 5 mm. The fluorocarbon resin plate was sandwiched between two glass plates and was allowed to stand for 16 minutes. Thus, a cylindrical test piece was prepared.

The test piece was dipped for one night in water at a temperature of 37°C. Thereafter, the physical properties of the test piece were evaluated.

The results are as follows.

| | |
|---|---|
| Brinell hardness | 33 |
| Compression strength: | 3500 kg/cm$^2$ |

Example 4

Example 3 was repeated, except that 1,2-bis-methacryloxyethoxy benzene was used in lieu of 1,3-bismethacryloxyethoxy benzene. The results are as follows.

Brinell hardness: 31

Compression strength: 3300 kg/cm$^2$

Example 5

A 5.0 g amount of 1,3-bismethacryloxyethoxy benzene, 5.0 g of triethylene glycol dimethacrylate, 15.0 g of silane treated ultra-finely divided anhydrous silica having primary particles with an average particle size of 40 µm, and 0.05 g of camphorquinone were mixed together with a spatula on a glass plate.

The resultant paste was filled into a fluorocarbon resin mold as used in Example 3 and was irradiated for 30 seconds by means of a visible light irradiator (Daylight manufactured by SHOFU DENTAL MFG. CO., LTD.) The test piece thus obtained was dipped in water at a temperature of 37°C for one night.

The results are as follows.

Brinell hardness: 30

Compression strength: 3840 kg/cm$^2$

As is clear from the above results, a cured product having very good strength properties was obtained.

Example 6

Example 3 was repeated, except that 1,3-bismethacryloxypolyethoxy benzene (n + m in the general formula (I) = 2.8) was used in lieu of 1,3-bis-methacryloxyethoxy benzene.

The results are as follows:

Brinell hardness: 33

Compression strength: 3450 kg/cm$^2$

## Claims

1. A readily curable composition comprising:

(a) from 5% to 95% by weight of a bis(methacryloxypolyethoxy) benzene having the general formula (I):

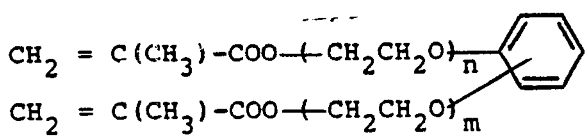

(I)

wherein n and m are the same or different numbers of 1 or more provided that n + m is from 2 to 4;

(b) a vinyl compound different from component (a); and

(b) a curing catalyst.

2. A composition according to claim 1 wherein the component (a) comprises 1,2- or 1,3-bis(methacryloxypolyethoxy) benzene.

3. A composition according to any preceding claim wherein the component (a) comprises 1,2- or 1,3-bis(methacryloxyethoxy) benzene.

4. A composition according to any preceding claim wherein component (b) comprises an acrylic compound.

5. A composition according to claim 4 wherein component (b) comprises dimethacrylate of triethylene glycol.

6. A composition according to any preceding claim wherein the curing catalyst comprises free radical generator or photosensitizer.

7. A composition according to any preceding claim wherein the composition further includes filler.

## Patentansprüche

1. Leicht vernetzbare Zusammensetzung, welche umfaßt: (a) von 5 bis 95 Gew.-% Bis(methacryloxy-polyethoxy)benzol mit der allgemeinen Formel (I):

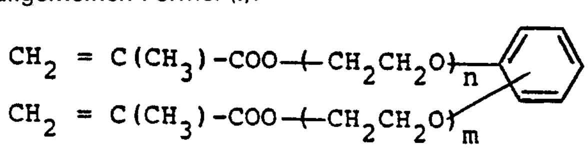

(I)

worin n und m gleiche oder verschiedene Zahlen von 1 oder größer sind, vorausgesetzt, daß n + m von 2

bis 4 ist, (b) eine von der Komponente (a) verschiedene Vinylverbindung und (c) Vernetzungskatalysator.

2. Zusammensetzung nach Anspruch 1, worin die Komponente (a) 1,2- oder 1,3-Bis(methacryloxy-polyethoxy)benzol darstellt.

3. Zusammensetzung nach einem der vorstehenden Ansprüche, worin die Komponente (a) 1,2- oder 1,3-Bis-(methacryloxyethoxy)benzol darstellt.

4. Zusammensetzung nach einem der vorstehenden Ansprüche, worin die Komponente (b) eine Acrylverbindung darstellt.

5. Zusammensetzung nach Anspruch 4, worin die Komponente (b) das Dimethacrylat von Triethylenglykol ist.

6. Zusammensetzung nach einem der vorstehenden Ansprüche, worin der Vernetzungskatalysator einen freien Radikalbildner oder einen Photosensibilisator umfaßt.

7. Zusammensetzung nach einem der vorstehenden Ansprüche, worin diese Zusammensetzung darüberhinaus einen Füllstoff umfaßt.

**Revendications**

1. Composition durcissable facilement, comprenant:

(a) de 5 à 95% en poids d'un bis(méthacryloxypolyéthoxy)benzène répondant à la formule générale (I):

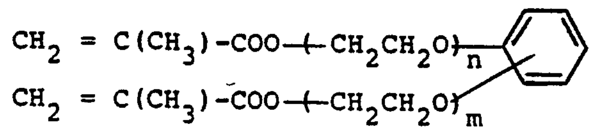

(I)

où n et m sont des nombres identiques ou différents de 1 ou plus, à condition que n + m soit compris entre 2 et 4;

(b) un composé vinylique différent du composé (a); et

(c) un catalyseur de durcissement.

2. Composition suivant la revendication 1, dans laquelle le composant (a) comprend le 1,2- ou 1,3-bis(méthacryloxypolyéthoxy)benzène.

3. Composition selon l'une quelconque des revendications précédentes, dans laquelle le composant (a) comprend le 1,2- ou 1,3-bis-(méthacryloxyéthoxy)benzène.

4. Composition selon l'une quelconque des revendications précédentes, dans laquelle le composant (b) comprend un composé acrylique.

5. Composition suivant la revendication 4, dans laquelle le composant (b) comprend le diméthacrylate de triéthylène glycol.

6. Composition selon l'une quelconque des revendications précédentes, dans laquelle le catalyseur de durcissement comprend un générateur de radicaux libres ou un photosensibilisant.

7. Composition selon l'une quelconque des revendications précédentes, dans laquelle la composition comprend en outre une charge.